# EUROPÄISCHE PATENTSCHRIFT

(11) **EP 1 185 397 B1**
(45) Veröffentlichungstag und Bekanntmachung des Hinweises auf die Patenterteilung: **23.04.2003**
(21) Anmeldenummer: 00940214.0
(22) Anmeldetag: 26.05.2000
(51) Int. Cl.: B25J 9/16

(54) **VERFAHREN ZUM VERMESSEN VON EINER HANDHABUNGSVORRICHTUNG**
METHOD FOR MEASURING A HANDLING DEVICE
PROCEDE POUR MESURER UN DISPOSITIF DE MANUTENTION

(30) Priorität: 28.05.1999 DE 19924511
(43) Veröffentlichungstag der Anmeldung: 13.03.2002
(73) Patentinhaber: Scheibner, Bernd, 38126 Braunschweig (DE)
(72) Erfinder: SCHEIBNER, Bernd, D-38126 Braunschweig (DE); THIEDIG, Ullrich, D-38118 Braunschweig (DE); WENTE, Holger, D-38108 Braunschweig (DE); KÖSTER, Bernd, D-38102 Braunschweig (DE)
(74) Vertreter: Lins, Edgar, Dipl.-Phys. Dr.jur.
(86) Internationale Anmeldenummer: DE0001691
(87) Internationale Veröffentlichungsnummer: WO00073028

(56) Entgegenhaltungen:
- DE-A- 4 421 699
- DE-A- 19 616 276
- FR-A- 2 669 257
- US-A- 4 362 977
- US-A- 5 297 238
- US-A- 5 374 830

## Beschreibung

Die Erfindung bezieht sich auf ein Verfahren zum Vermessen von Handhabungsvorrichtungen, insbesondere Werkzeugmaschinen oder Handhabungsrobotern, ein Meßsystem zum Durchführen eines derartigen Vermessungsverfahrens.

Handhabungsvorrichtungen wie z. B. Werkzeugmaschinen werden im allgemeinen kalibriert und geprüft, indem die Bewegungsachsen des Werkzeuges und Werkstückes auf ihre Positioniergenauigkeit überprüft werden und anschließend aus den Abweichungen in den Bewegungsachsen korrigierte Einstellwerte ermittelt werden. Hierzu werden die Bewegungsachsen nacheinander auf Geradheitsabweichungen, ihre Rechtwinkligkeit und ihre Parallelität zueinander vermessen.

Die Vermessung einer Werkzeugmaschine, wie z. B. einer Drehoder Fräsmaschine, kann z. B. durch ein Prüfnormal mit Drei-Koordinaten-Meßtaster zur Bestimmung der Positionierungsgenauigkeit erfolgen. Weiterhin ist die Verwendung von Laserinterferometern zur Erfassung von translatorischen Bewegungen bekannt, die eine genaue Vermessung der Bewegungsachsen ermöglichen. Auch kann eine Ortsbestimmung eines Laserstrahls in zwei Achsen durch z. B. positionsempfindliche Dioden vorgenommen werden. Diese gestatten unter anderem Rundlaufmessungen und Prüfungen der Parallelität von Drehachsen, die mit einem Laserinterferometer nicht erfaßbar sind. Hierbei dient der Laserstrahl als Geradheitsnormal.

Zwar ist durch eine derartige Vermessung der einzelnen Achsen einer Werkzeugmaschine oder eines Handhabungsroboters grundsätzlich eine gute Ermittlung der Positionierungenauigkeiten möglich. Nachteilhaft hieran ist jedoch, daß die Einstellung und Vermessung der einzelnen Achsen längere Zeit beansprucht. Weiterhin ist in der Regel eine manuelle Umstellung zwischen den Vermessungsschritten der einzelnen Achsen notwendig, bei denen die Meßgeräte neu positioniert werden müssen oder sogar verschiedene Meßgeräte verwendet werden müssen. Dies hat zur Folge, daß die Vermessung der Positionierungenauigkeiten relativ selten und mit relativ wenigen Meßpositionen durchgeführt wird. Hierdurch wird jedoch unter anderem die Positionierungs- und Fertigungsgenauigkeit der Vorrichtung verringert.

Die US 4,362,977 zeigt ein Kalibrierverfahren für einen Roboter, bei dem der Roboter zu einem Satz von Nominalpositionenen verfahren wird, in denen Meßwerte von einem Meßsystem aufgenommen werden. Diese Messung kann mit späteren Messungen verglichen werden, wobei aus diesem Vergleich Einstellungenauigkeiten kompensiert werden können. Dieses Dokument wird als Beschreibung des nächstliegenden standes der Technik des ergindungsgemäßen Verfahrens angesehen.

Der Erfindung liegt die Aufgabe zugrunde, gegenüber den bekannten Vermessungsverfahren und Meßsystemen Verbesserungen zu erreichen, und insbesondere eine schnelle und genaue, vorzugsweise auch selbsttätige, Vermessung einer Handhabungsvorrichtung durch seine Benutzer zu ermöglichen.

Diese Aufgabe wird durch ein Vermessungsverfahren zum Vermessen von Handhabungsvorrichtungen gemäß Anspruch 1 gelöst.

Weiterhin wird diese Aufgabe durch ein optisches Meßsystem gemäß Anspruch 17 gelöst. Die DE-A-44 221 699 bildet die Grundlage für den Oberbegriff von Anspruch 17.

Erfindungsgemäß ist somit vorgesehen, daß die Handhabungsvorrichtung mindestens einen Meßkörper aufnimmt und dieser Meßkörper von der Handhabungsvorrichtung gemäß Einstellwerten an verschiedene Meßpositionen verfahren wird.

Da erfindungsgemäß der Meßkörper direkt von der Handhabungsvorrichtung aufgenommen wird, gehen in die Messung alle zwischen der Handhabungsvorrichtung und dem Meßkörper liegenden Maschinenelemente, insbesondere Manipulationseinrichtungen und Greifeinrichtungen ein. Somit wird die Überprüfung der gesamten Funktionskette der Handhabungsvorrichtung ermöglicht, ohne die Elemente der Funktionskette einzeln überprüfen zu müssen.

Somit ist eine zügige Vermessung des kompletten Arbeitsraums der Maschinen mittels einiger Meßpositionen möglich ohne eine aufwendige Vermessung z. B. einzelner Führungsachsen in getrennten Arbeitsschritten auf ihre Parallelität, Winkligkeit und Vorschubungenauigkeit. Hierdurch kann die Vermessung häufiger vollzogen werden. Bei einem Einsatz für Werkzeugmaschinen, z. B. Bearbeitungszentren, wird hierdurch die Fertigungsgenauigkeit der Maschine durch die häufigeren Vermessungsverfahren gesteigert.

Die Meßpositionen können den Anforderungen entsprechend gewählt werden. Aufgrund der Fehler der Handhabungsvorrichtung können diese Meßpositionen von den idealen Sollpositionen, die für die jeweiligen Einstellwerte eingenommen werden sollten, abweichen.

Die Meßkörper werden in den Meßpositionen jeweils von einem - vorzugsweise optischen - Meßsystem erfaßt. Dieses Meßsystem kann insbesondere zwei Bildaufnehmer aufweisen, die mit vorgegebenem Abstand zueinander positioniert sind und deren optische Achsen vorteilhafterweise in einem vorgegebenen Winkel zueinander stehen. Hierdurch wird eine genaue Positionsbestimmung, z. B. durch ein photogrammetrisches Verfahren, ermöglicht. Die Bildaufnehmer können insbesondere digitale Meßwerte liefern und sind vorzugsweise Kameras, insbesondere CCD-Kameras.

Die Meßwerte des Meßsystems werden nachfolgend mit vorgespeicherten Referenzdaten verglichen. Diese Referenzdaten enthalten Referenzpositionen und Referenzeinmeßdaten, die aus einer zur Kalibrierung des Meßsystems dienenden, vorab durchgeführten Messung stammen. Bei einer derartigen Kalibrierung wird mindestens ein Meßkörper von einer Einmeßvorrichtung gemäß Referenzeinstellwerten in Referenzpositionen verfahren, in denen Referenzeinmeßwerte von dem Meßsystem aufgenommen werden. Diese aus Referenzpositionen und Referenzeinmeßwerten gebildeten Referenzdaten dienen später zum Vergleich mit den Meßwerten des Meßsystems bei der Vermessung der Handhabungsvorrichtung. Somit können durch einen Vergleich der Meßwerte und der Referenzeinmeßwerte Istkoordinaten der Meßpositionen ermittelt werden. Dabei können jeweilige Sollkoordinaten der Meßpositionen, die aufgrund der Einstellwerte zu erwarten sind, mit den Istkoordinaten der Meßposition verglichen und Abweichungen festgestellt werden. Je nach den Meßerfordernissen können auch nur Differenzvektoren der gemessenen Meßpositionen, z. B. von zwei Meßpunkten einer Achse oder der Differenzvektor zwischen einer Werkzeugaufnahmenposition und einer Werkstückaufnahmenposition, aus dem Vergleich ermittelt werden.

Die Vermessung kann auch durchgeführt werden, indem das Meßsystem selbst von der Handhabungsvorrichtung aufgenommen wird. Es kann insbesondere von einer Werkzeugaufnahme oder Werkstückaufnahme aufgenommen und durch die Positionierungsmittel verfahren werden. Wenn das Meßsystem von der Werkstückaufnahme aufgenommen wird, wird vorteilhafterweise ein Meßkörper von der Werkzeugaufnahme aufgenommen, und umgekehrt. Somit ist eine Messung der Relativabstände von Werkzeugaufnahme und Werkstückaufnahme zueinander möglich.

Erfindungsgemäß werden aus dem Vergleich der Istkoordinaten mit den Sollkoordinaten Korrekturdaten ermittelt. Diese Korrekturdaten bilden ein Maß für die Abweichung bzw. Dejustierung der Handhabungsvorrichtung. Die Korrekturdaten werden zur Kompensation der Abweichungen verwendet, indem korrigierte Einstellwerte berechnet werden.

Vorteilhafterweise können die Korrekturdaten somit zur Korrektur der Einstellwerte verwendet werden, so daß bei den nächsten Einstellungen der Handhabungsvorrichtung korrigierte Einstellwerte verwendet werden, die zu den gewünschten Positionseinstellungen führen.

Erfindungsgemäß kann somit ein Meßsystem beim Hersteller zunächst kalibriert werden, indem zu mehreren Referenzpositionen Referenzeinmeßwerte aufgenommen werden. Der Kunde kann anschließend eine Vermessung seiner Handhabungsvorrichtung vornehmen, indem er den Arbeitsraum jeweils mit verschiedenen Einstellwerten vermißt und durch das erfindungsgemäße Vermessungsverfahren unter Benutzung des kalibrierten Meßsystems die Referenzpositionen virtuell in die Handhabungsvorrichtung überträgt. Somit kann insbesondere eine hochgenaue Kalibrierung bzw. Einmessung in das Vermessungsverfahren übertragen werden. Somit können Abweichungen von den Sollpositionen als Fehler bzw. Ungenauigkeiten erkannt werden und diese korrigiert werden, indem korrigierte Einstellwerte berechnet werden.

Bei CNC-gesteuerten Werkzeugmaschinen und Robotern, beispielsweise auch Robotern mit Parallelkinematik, können die Korrekturdaten zur selbsttätigen Ermittlung von korrigierten Einstellwerten herangezogen werden. Dies ist insbesondere für Roboter mit Parallelkinematik (Hexapoden) vorteilhaft, bei denen eine einzelne Vermessung der sechs Einstellparameter sehr aufwendig ist.

Die verschiedenen Meßpositionen können von den Positionierungsmitteln der Handhabungsvorrichtung selbsttätig eingenommen werden, wobei in jeder Meßposition die Meßwerte der Meßpositionen der Meßkörper selbsttätig ermittelt werden, und nachfolgend die Korrekturwerte selbsttätig aus den Meßwerten und Referenzdaten ermittelt werden.

Die Meßkörper können insbesondere auch um eine Symmetrieachse gedreht werden. Indem die Meßkörper schnell gedreht werden, können Fehler bzw. Ungenauigkeiten der Meßkörper herausgemittelt werden. Hierzu ist vorteilhafterweise die Drehperiode des Meßkörpers kleiner, vorteilhafterweise um ein Vielfaches kleiner als die Belichtungszeit des Meßsystems. Weiterhin kann ein Meßkörper nacheinander in verschiedene Drehpositionen gedreht werden, bei denen jeweils Meßwerte genommen werden. Wenn der Meßkörper z. B. eine runde Fläche darstellt, können somit aus verschiedenen Blickrichtungen zueinander gedrehte Ellipsen ermittelt werden, aus denen wiederum der Mittelpunkt des Meßkörpers genau bestimmt werden kann. Weiterhin kann aus einer Bestimmung der Halbachsen der Ellipsen ebenfalls auf den optischen Mittelpunkt des Meßkörpers geschlossen werden.

Indem für die Meßkörper Infrarot-Leuchtdioden verwendet werden und die Bildaufnehmer mit Infrarot-Filtern versehen werden, kann unerwünschtes Störlicht von den Messungen ferngehalten werden.

Die Referenzpositionen können zum einen ein gleichmäßiges Raster über den Arbeitsraum ergeben, es kann jedoch auch ein ungleichmäßiges Raster verwendet werden, bei dem einige wichtige Einstellungen genauer, d. h. mit geringerem Abstand der Referenzpunkte zueinander, vermessen sind.

Erfindungsgemäß können insbesondere zunächst lediglich einige Meßpositionen der Handhabungsvorrichtung angefahren werden. Dies kann z. B. per Hand erfolgen. Anschließend können weitere Meßpositionen grob mittels Interpolation ermittelt und angefahren werden. Somit kann ein beliebiges Gitter von Wertepaaren ermittelt werden.

Alternativ hierzu kann, falls die Handhabungsvorrichtung bereits früher einmal vermessen worden ist, ein gespeichertes Gitter von Meßpositionen direkt angefahren werden, in denen von dem Meßsystem die Meßwerte ermittelt werden.

Anders als in dem in der US 4,362,977 gezeigten Verfahren kann somit erfindungsgemäß eine Handhabungsvorrichtung durch eine Vermessung und Änderung der Einstellwerte kalibriert werden, indem bei einer Einmessung des Meßsystems außerhalb der Handhabungsvorrichtung in Referenzpositionen Referenzeinmeßwerte ermittelt werden, die direkt bei einer nachfolgenden Vermessung der Handhabungsvorrichtung mit Meßwerten von Meßpositionen der Handhabungsvorrichtung verglichen werden können. Da erfindungsgemäß die Kalibrierung des Meßsystems in einer vorzugsweise hochgenauen Einmeßvorrichtung vorgenommen werden kann, können sehr genaue Referenzeinmeßwerte von Referenzpositionen zu dem Meßsystem abgespeichert werden und - möglicherweise nach einem Transport des Meßsystems von der Einmeßvorrichtung zu der Handhabungsvorrichtung - für die Vermessung der Handhabungsvorrichtung herangezogen werden. Somit kann die Genauigkeit einer speziellen Einmeßvorrichtung durch Speicherung der Referenzeinmeßwerte und Referenzpositionen auch für eine Vermessung von z. B. weiter entfernt gelegenen Handhabungsvorrichtungen herangezogen werden.

Die Erfindung wird im folgenden anhand der beiliegenden Zeichnungen an einigen Ausführungsformen näher erläutert. Es zeigen:
- **Figur 1**: ein Meßsystem gemäß einer Ausführungsform der Erfindung;
- **Figur 2**: eine Werkzeugmaschine mit einem Meßsystem gemäß einer Ausführungsform der Erfindung;
- **Figur 3**: eine Werkzeugmaschine mit Meßsystem gemäß einer weiteren Ausführungsform.

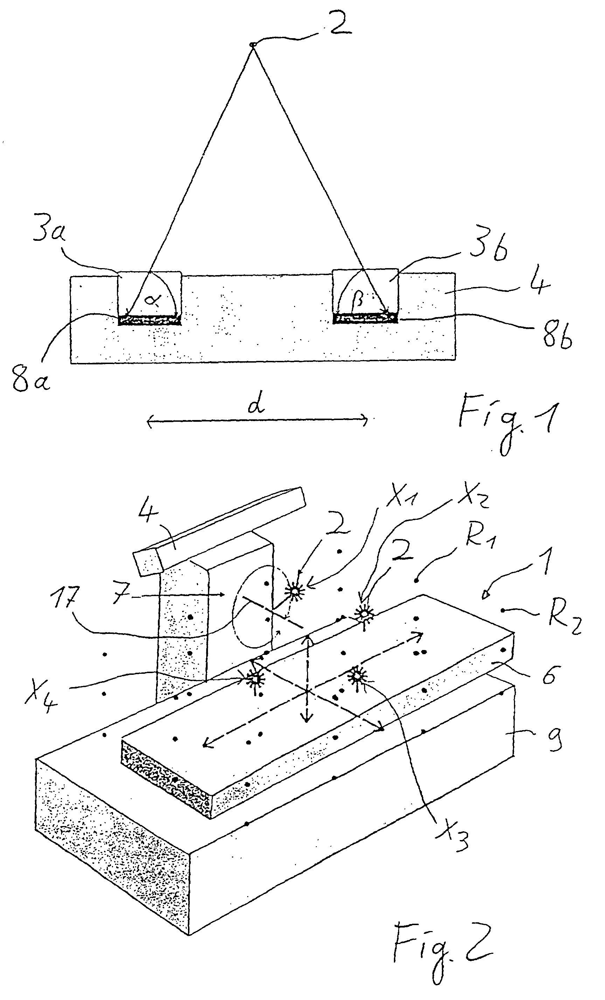

Ein optisches Meßsystem weist gemäß Figur 1 eine Meßkonsole 4 auf, in oder an der in einem vorbekannten Abstand d zwei CCD-Kameras 3a, 3b angebracht sind. Die optischen Achsen der CCD-Kameras verlaufen parallel oder unter einem Winkel aufeinander zu, so daß sie sich vor den Kameras kreuzen. Ein Meßkörper 2, der im Blickfeld beider CCD-Kameras 3a, 3b positioniert ist, kann entsprechend von den Kameras unter den Winkeln α und β gegenüber der Horizontalen - ihrer Verbindungslinie - bzw. einem entsprechenden Winkel gegenüber ihrer optischen Achse erfaßt werden. Die CCD-Kameras liefern entsprechend jeweils zweidimensionale Bilder, in denen ein Meßkörper beispielsweise in den Koordinaten x1, y1 bzw. x2, y2 erfaßt ist. Die Koordinaten werden dabei von Photodiodenarrays 8a, 8b der CCD-Kameras 3a, 3b festgelegt. Die Position des Meßkörpers 2 relativ zu der Meßkonsole 4 bzw. den CCD-Kameras 3a, 3b kann dabei in Kenntnis des Basisabstandes d durch eine photogrammetrische Berechnung ermittelt werden, bei der die Winkel α und β durch die Koordinaten x1, y1 und x2, y2 berechnet werden können.

In einem Kalibriervorgang beim Hersteller wird das optische Meßsystem derartig genau vermessen, daß die Lage von (virtuellen) Referenzpunkten Ri = R1, R2, ... relativ zu dem optischen Meßsytem mit Meßkonsole 4 und CCD-Kameras 3a, 3b hochgenau bekannt ist. Die Referenzpositionen bzw. Koordinaten der Referenzpositionen werden zusammen mit den Referenzeinmeßwerten in einer Speichereinrichtung des Meßsystems gespeichert.

Die Speichereinrichtung kann in der Meßkonsole 4 selbst angeordnet sein. Weiterhin ist es möglich, daß die Speichereinrichtung außerhalb der Meßkonsole und somit außerhalb der Handhabungsvorrichtung angeordnet ist.

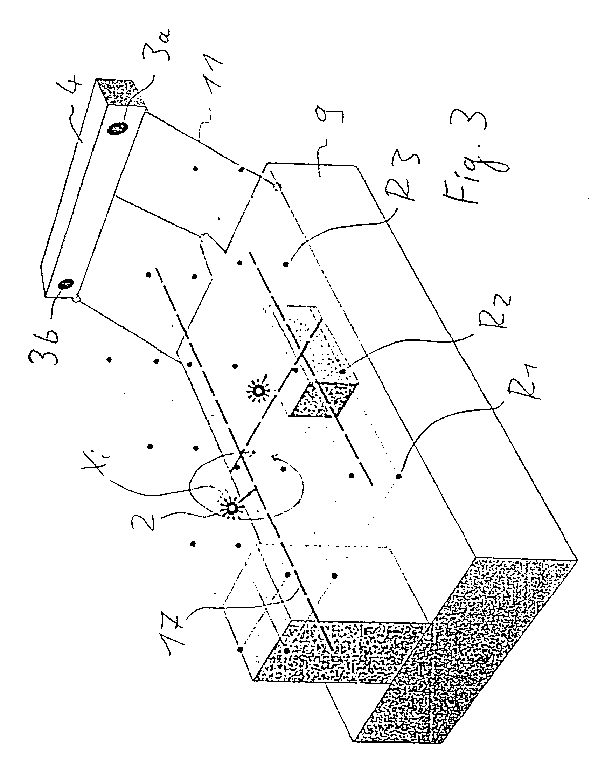

Figur 2 und 3 zeigen eine Werkzeugmaschine 1 mit einem Bearbeitungstisch 6. Relativ zu der Spindel 7, von der in Figur 2 lediglich die Spindelachse 17 eingezeichnet ist, kann ein Bearbeitungstisch 6 in bekannter Weise verfahren werden. Die Spindel kann dabei einen Meßkörper 2 in der Spindelachse 17 oder mit radialem Abstand zu der Spindelachse 17, wie in Figur 2 gezeigt, aufnehmen und längs der Spindelachse und um die Spindelachse herum verfahren. Weiterhin können Meßkörper 2 auf dem Bearbeitungstisch 6 angebracht werden.

Eine Vermessung der Werzeugmaschine kann nun durchgeführt werden, indem mindestens ein Meßkörper 2, vorteilhafterweise mehrere Meßkörper 2, in dem Bearbeitungsraum der Werkzeugmaschine 1 verfahren werden und zu mehreren Einstellwerten, z. B. des Spindelvorschubs der Spindel 7, jeweils Meßwerte der Positionen der Meßkörper 2 von dem Meßsytem 4, 3a, 3b aufgenommen werden. Aufgrund von Ungenauigkeiten und Fehleinstellungen der Werkzeugmaschine können die eingestellten Meßpositionen der Meßkörper 2 von den idealen Sollpositionen, die sich bei fehlerfreier Einstellung aufgrund der Einstellwerte der Werkzeugmaschine ergeben müßten, abweichen. Da das optische Meßsystem beim Hersteller des Meßsystems mittels einer Einmeßvorrichtung hochgenau kalibriert ist, können Abweichungen der Meßwerte von idealen Meßwerten direkt auf Ungenauigkeiten bei der Einstellung zurückgeführt werden.

Die Ermittlung der tatsächlich eingenommenen Meßpositionen Xi der Meßkörper 2 erfolgt durch einen Vergleich mit hochgenau vermessenen Referenzpositionen Ri = R1, R2, ..., die zusammen gemäß Figur 2 in dem Bearbeitungsraum ein Raster bilden, das vorteilhafterweise den ganzen Bearbeitungsraum der Werkzeugmaschine ausfüllt.

Die Meßpositionen Xi werden relativ zu den Referenzpositionen Ri z. B. durch Interpolation, Extrapolation oder ein anderes mathematisches Verfahren bestimmt, so daß eine Vermessung des Arbeitsraumes der Meßmaschine durch die Meßkörper 2 ermöglicht wird. Somit kann wiederum die relative Zuordnung der einzelnen Meßpositionen zueinander und somit die Position innerhalb eines werkzeugmaschinenfesten Koordinatensystems durchgeführt werden.

Zu den Meßpositionen werden somit Istkoordinaten durch das Meßsystem ermittelt, die mit den zu erwartenen Koordinaten bzw. Sollkoordinaten verglichen werden können.

Eine Spindelachse 17 der Spindel 7 kann vorteilhafterweise vermessen werden, indem ein Meßkörper 2 gemäß Figur 2, 3 außerhalb der Spindelachse 17 aufgenommen wird. Indem ohne Verstellung des Spindelvorschubs die Meßpositionen des Meßkörpers 2 bei mindestens drei verschiedenen Winkeleinstellungen gemessen werden, kann der Kreis, auf dem der Meßkörper 2 sich bewegt, ermittelt werden und hieraus insbesondere der Kreismittelpunkt bestimmt werden, durch den die Spindelachse 17 senkrecht verläuft. Somit kann der genaue Verlauf der Spindelachse 17 bestimmt werden. Die Spindelachse 17 kann jedoch auch vermessen werden, indem die Spindel mehrere Meßkörper 2 außerhalb der Spindelachse 17 aufnimmt und eine Messung an mindestens zwei verschiedenen Winkeleinstellungen vornimmt.

Die Kalibrierung des optischen Meßsystems erfolgt beispielsweise beim Hersteller des Meßsystems mittels einer Einmeßvorrichtung, bei der in umgekehrter Anwendung des Meßverfahrens von Figur 2 eine dem Bearbeitungstisch 6 entsprechende Grundplatte mit mindestens einem, vorzugsweise mehreren Markierungskörpern 2 auf einer exakten Geradführung definiert verfahren wird.

Durch einen definierten Vorschub einer Spindel mit Schrittmotor kann eine schrittweise Positionierung der Grundplatte erreicht werden, so daß ein Raum entsprechend der gewünschten Meßraumgröße des zu kalibrierenden Meßsystems abgefahren wird. Es entsteht das Raster von Referenzpositionen Ri, das in der Form gespeichert wird, daß zu den Referenzpositionen, die z. B. durch ein kartesisches Koordinatensystem festgelegt werden können, jeweils die Referenzeinmeßwerte gespeichert werden. Somit wird nachträglich ein direkter Vergleich der Meßwerte von Meßpositionen Xi mit diesen Referenzeinmeßwerten ermöglicht, so daß die optischen Fehler des Meßsystems durch diesen direkten Vergleich weitgehend eliminiert werden können.

Indem die Werkzeugmaschine Meßkörper aufnimmt, werden alle zwischen Werkzeug und Werkstück liegenden Maschinenelemente der Funktionskette berücksichtigt, ohne daß die verschiedenen Achsen sämtlicher mechanischer Führungen vermessen werden müssen. Indem Meßkörper 2 in die Werkzeugaufnahme und die Werkstückaufnahme eingesetzt werden, ist eine direkte Vermessung der relativen Anordnung von Werkstück- und Werkzeugaufnahme zueinander möglich.

Vorteilhafterweise kann das Meßsystem selbst von der Werkstückaufnahme oder Werkzeugaufnahme aufgenommen werden und einen Meßkörper in der jeweils anderen Aufnahmeeinrichtung erfassen. In diesem Fall wird die Relativposition zwischen Werkstückaufnahme und Werkzeugaufnahme vermessen.

Die Einmeßvorrichtung selbst wird in einer Urkalibrierung bzw. Ureinmessung bei einer Prüfstelle vermessen, so daß die Fehler der Kalibrierung durch den Hersteller des Meßsystems nahezu verschwindend sind.

Erfindungsgemäß können insbesondere auch Werkzeugmaschinen und Roboter mit Parallelkinematik, d. h. insbesondere Hexapoden, vermessen werden. Da erfindungsgemäß die einzelnen Führungsachsen der Werkzeugmaschine bzw. des Handhabungsroboters nicht einzeln vermessen werden, können direkt verschiedene Werte an der Hexapodeneinstellung eingestellt und die hierdurch erreichten Meßpositionen vermessen werden. Es entfällt somit insbesondere eine aufwendige Vermessung der sechs Einstellachsen einer Hexapode, wie sie bei herkömmlichen Vermessungsverfahren mit achsenorientierter Vermessung notwendig wäre.

Es können wie in Figur 2, 3 gezeigt regelmäßige Raster, z. B. mit Referenzpositionen entlang fester Abstände des kartesischen Koordinatensystems, verwendet werden. Es ist auch die Verwendung von Rastern mit unregelmäßigen Abständen zwischen den Referenzpositionen möglich, um die Genauigkeit bei der Ermittlung von Meßpositionen in gewissen Bereichen der Werkzeugmaschine zu erhöhen.

## Patentansprüche

1. Verfahren zum Vermessen einer Handhabungsvorrichtung, insbesondere einer Werkzeugmaschine (1) oder eines Handhabungsroboters, bei dem von der Handhabungsvorrichtung (1) mindestens ein Messkörper (2) aufgenommen wird, der Messkörper gemäß handhabungsvorrichtungsseitiger Einstellwerte (Ei) nacheinander an verschiedene, über den dreidimensionalen Arbeitsraum der Handhabungsvorrichtung verteilte Messpositionen (Xi) verfahren wird und
ein Messsystem (3a, 3b, 4) Messwerte (Mi) über die Messpositionen des Messkörpers (2) ermittelt, **dadurch gekennzeichnet, dass**
das Messsystem (3a, 3b, 4) kalibriert wird, indem mindestens ein Messkörper (2) von einer Einmessvorrichtung aufgenommen wird, in über den dreidimensionalen Arbeitsraum verteilte Referenzpositionen (Ri) verfahren wird, von dem Messsystem (3a, 3b, 4) in den Referenzpositionen Referenzeinmesswerte ermittelt werden und Referenzdaten aus den Referenzpositionen und den Referenzeinmesswerten gebildet werden,
die ermittelten Messwerte (Mi) mit den gespeicherten Referenzdaten verglichen und aus dem Vergleich Ist-Koordinaten des Messkörpers (2) ermittelt werden,
aus einem Vergleich der Ist-Koordinaten mit aus den Einstellwerten berechneten Soll-Koordinaten Korrekturdaten für die Einstellwerte ermittelt werden,
aus den Korrekturdaten korrigierter Einstellwerte für die Handhabungsvorrichtung (1) ermittelt werden und
bei dem Vergleich zu Messwerten (Mi), die nicht vorbekannten Referenzeinmeßwerten von Referenzpositionen (Ri) entsprechen, Ist-Koordinaten der Messpositionen (Xi) aus den Referenzpositionen durch Interpolation und/oder Extrapolation, insbesondere lineare Inter- oder Extrapolation, ermittelt werden.

2. Verfahren nach Anspruch 1, **dadurch gekennzeichnet, daß** die korrigierten Einstellwerte von der Handhabungsvorrichtung (1) selbsttätig aus den Korrekturdaten ermittelt werden und nachfolgend als Einstellwerte verwendet werden.

3. Verfahren nach einem der Ansprüche 1 oder 2, **dadurch gekennzeichnet, daß** das optische Meßsystem zwei voneinander beabstandete optische Bildaufnehmer (3a, 3b) aufweist.

4. Verfahren nach Anspruch 3, **dadurch gekennzeichnet, daß** die Ist-Koordinaten der Meßpositionen (Xi) aus den Meßwerten (Mi) durch ein photogrammetrisches Verfahren mittels eines vorbekannten Abstands (d) zwischen den mindestens zwei Bildaufnehmern (3a, 3b) ermittelt werden.

5. Verfahren nach einem der Ansprüche 1 bis 4, **dadurch gekennzeichnet, daß** mindestens zwei Meßkörper (2) von der Handhabungsvorrichtung aufgenommen werden, vorzugsweise jeweils ein Meßkörper (2) in einer Werkzeugaufnahme und ein Meßkörper (2) in einer Werkstückaufnahme, und Relativpositionen zwischen den wenigstens zwei Meßkörpern ermittelt werden.

6. Verfahren nach einem der Ansprüche 1 bis 5, **dadurch gekennzeichnet, daß** das optische Meßsystem von der Handhabungsvorrichtung aufgenommen wird, und Relativpositionen zu mindestens einem von der Handhabungsvorrichtung aufgenommenen Meßkörper gemessen werden.

7. Verfahren nach Anspruch 6, **dadurch gekennzeichnet, daß** das Meßsystem in einer Werkzeugaufnahme und ein Meßkörper in einer Werkstückaufnahme, oder das Meßsystem in einer Werkstückaufnahme und der Meßkörper in einer Werkzeugaufnahme aufgenommen sind.

8. Verfahren nach einem der Ansprüche 1 bis 7, **dadurch gekennzeichnet, daß** mindestens ein Meßkörper (2) von einer Spindel (7) der Handhabungsvorrichtung in einer von der Spindelachse (17) der Spindel (7) beabstandeten Position aufgenommen wird und ohne Verstellung des Spindelvorschubs durch Drehung um die Spindelachse (17) in mindestens drei Meßpositionen verschwenkt wird, und nachfolgend aus den drei Meßpositionen die Spindelachse (17) bestimmt wird.

9. Verfahren nach einem der Ansprüche 1 bis 8, **dadurch gekennzeichnet, daß** mindestens zwei Meßkörper (2) von einer Spindel (7) der Handhabungsvorrichtung in von der Spindetachse (17) der Spindel (7) beabstandeten Positionen aufgenommen werden und ohne Verstellung des Spindelvorschubs durch Drehung um die Spindelachse (17) in mindestens zwei Meßpositionen verschwenkt werden, und nachfolgend aus den mindestens vier gemessenen Meßpositionen die Spindelachse (17) bestimmt wird.

10. Verfahren nach einem der Ansprüche 1 bis 9, **dadurch gekennzeichnet, daß** die Meßkörper selbstleuchtend sind.

11. Verfahren nach Anspruch 10, **dadurch gekennzeichnet, daß** die Meßkörper infrarotes Licht aussenden und die Bildaufnehmer (3a, 3b) einen Infrarotfilter aufweisen.

12. Verfahren nach einem der Ansprüche 1 bis 11, **dadurch gekennzeichnet, daß** die Mitteipunktsnormalen durch Projektionsflächen, die sich durch Projektionen der Meßkörper in verschiedene Blickrichtungen ergeben, sich in einem gemeinsamen geometrischen Mittelpunkt des Meßkörpers schneiden.

13. Verfahren nach einem der Ansprüche 1 bis 12, **dadurch gekennzeichnet, daß** von der Handhabungsvorrichtung selbsttätig nacheinander die verschiedenen Einstellwerte von den Positionierungsmitteln eingestellt werden, Meßwerte der Meßpositionen der Meßkörper ermittelt werden und aus den Meßwerten und Referenzwerten Korrekturdaten ermittelt werden.

14. Verfahren nach einem der Ansprüche 1 bis 13, **dadurch gekennzeichnet, daß** eine Werkzeugmaschine mit Parallelkinematik oder ein Roboter mit Parallekkinematik vermessen wird.

15. Verfahren nach einem der Ansprüche 1 bis 14, **dadurch gekennzeichnet, daß** mindestens ein Meßkörper um eine Symmetrieachse rotiert.

16. Verfahren nach einem der Ansprüche 1 bis 15, **dadurch gekennzeichnet, daß** die Referenzpositionen (Ri) in gleichmäßigen Abständen über den dreidimensionalen Arbeitsraum der Handhabungsvorrichtung verteilt angeordnet sind.

17. Optisches Messsystem zur Durchführung eines Verfahrens nach einem der Ansprüche 1 bis 16, mit mindestens zwei voneinander mit vorbekanntem Basisabstand (d) beabstandeten Bildaufnehmern (3a, 3b), **gekennzeichnet durch** einer Speichereinrichtung für **durch** Kalibrierung des Messsystems (3a, 3b, 4) ermittelte Referenzdaten aus Referenzpositionen und Referenzeinmesswerten, Mitteln zur Ermittlung von Messwerten (Mi) über Messpositionen des Messkörpers (2), Mitteln zum Vergleich der Messwerte (Mi) mit den gespeicherten Referenzdaten, Mitteln zum Vergleich der Messwerte (Mi) mit aus Einstellwerten berechneten Soll-Koordinaten und zur Ermittlung von Korrekturdaten für die Einstellwerte aus dem Vergleich, Mitteln zur Ermittlung von korrigierten Einstellwerten für die Handhabungs-vorrichtung (1) und mit Interpolations- und/oder Extrapolationsmitteln zur Ermittlung von Ist-Koordinaten der Messpositionen (Xi) aus den Referenzpositionen bei einem Vergleich zu Messwerten (Mi), die nicht vorbekannten Referenzeinmesswerte der Referenzpositionen (Ri) entsprechen.

18. Messsystem nach Anspruch 17, **dadurch gekennzeichnet, dass** zwei Bildaufnehmer (3a, 3b) durch eine Konsole (4) starr miteinander verbunden sind.

19. Messsystem nach Anspruch 18, **dadurch gekennzeichnet, dass** die optischen Achsen der mindestens zwei Bildaufnehmer in einem vorgegebenen Winkel zueinander angeordnet sind und sich vor den Bildaufnehmern kreuzen.

20. Messsystem nach einem der Ansprüche 17 bis 19, **dadurch gekennzeichnet, dass** die Bildaufnehmer CCD-Kameras sind.

## Claims

1. Method for measuring a handling device, in particular a machine tool (1) or a handling robot, in which at least one measuring element (2) is picked up by the handling device (1), the measuring element is moved successively to different measuring positions (Xi) distributed over the three-dimensional working space of the handling device, in accordance with handling device setting values (Ei), and
a measuring system (3a, 3b, 4) determining measured values (Mi) relating to the measuring positions of the measuring element (2), **characterized in that**
the measuring system (3a, 3b, 4) is calibrated by at least one measuring element (2) being picked up by a calibration device, moved into reference positions (Ri) distributed over the three-dimensional working space, reference calibration values being determined in the reference positions by the measuring system (3a, 3b, 4), and reference data being formed from the reference positions and the reference calibration values,
the measured values (Mi) determined are compared with the stored reference data, and actual coordinates of the measuring element (2) are determined from the comparison,
correction data for the setting values are determined from a comparison between the actual coordinates and reference coordinates calculated from the setting values,
corrected setting values for the handling device (1) are determined from the correction data, and during the comparison with measured values (Mi) which do not correspond to previously known reference calibration values of reference positions (Ri), actual coordinates of the measuring positions (Xi) are determined from the reference positions by means of interpolation and/or extrapolation, in particular linear interpolation or extrapolation.

2. Method according to Claim 1, **characterized in that** the corrected setting values are determined automatically from the correction data by the handling device (1) and are subsequently used as setting values.

3. Method according to one of Claims 1 and 2, **characterized in that** the optical measuring system has two mutually spaced optical image recorders (3a, 3b).

4. Method according to Claim 3, **characterized in that** the actual coordinates of the measuring positions (Xi) are determined from the measured values (Mi) by means of a photogrammetric method by means of a previously known spacing (d) between the at least two image recorders (3a, 3b).

5. Method according to one of Claims 1 to 4, **characterized in that** at least two measuring elements (2) are picked up by the handling device, preferably in each case one measuring element (2) in a tool holder and one measuring element (2) in a workpiece holder, and relative positions between the at least two measuring elements are determined.

6. Method according to one of Claims 1 to 5, **characterized in that** the optical measuring system is picked up by the handling device, and relative positions relating to at least one measuring element picked up by the handling device are measured.

7. Method according to Claim 6, **characterized in that** the measuring system is picked up in a tool holder and one measuring element in a workpiece holder, or the measuring system is picked up in a workpiece holder and the measuring element in a tool holder.

8. Method according to one of Claims 1 to 7, **characterized in that** at least one measuring element (2) is picked up by a spindle (7) of the handling device in a position spaced apart from the spindle axis (17) of the spindle (7) and, without adjusting the spindle feed, is pivoted into at least three measuring positions by being rotated about the spindle axis (17), and the spindle axis (17) is subsequently determined from the three measuring positions.

9. Method according to one of Claims 1 to 8, **characterized in that** at least two measuring elements (2) are picked up by a spindle (7) belonging to the handling device in positions spaced apart from the spindle axis (17) of the spindle (7) and, without adjusting the spindle feed, are pivoted into at least two measuring positions by being pivoted about the spindle axis (17), and the spindle axis (17) is subsequently determined from the at least four measuring positions measured.

10. Method according to one of Claims 1 to 9, **characterized in that** the measuring elements are self-luminous.

11. Method according to Claim 10, **characterized in that** the measuring elements emit infrared light, and the image recorders (3a, 3b) have an infrared filter.

12. Method according to one of claims 1 to 11, **characterized in that** the centre normals through projection areas which result from projections of the measuring elements in different viewing directions intersect at a common geometric centre of the measuring element.

13. Method according to one of Claims 1 to 12, **characterized in that** the various setting values are successively set automatically by the positioning means of the handling device, measured values of the measuring positions of the measuring elements are determined, and correction data are determined from the measured values and reference values.

14. Method according to one of Claims 1 to 13, **characterized in that** a machine tool with parallel kinematics or a robot with parallel kinematics is measured.

15. Method according to one of Claims 1 to 14, **characterized in that** at least one measuring element rotates about an axis of symmetry.

16. Method according to one of Claims 1 to 15, **characterized in that** the reference positions (Ri) are arranged distributed at uniform intervals over the three-dimensional working space of the handling device.

17. Optical measuring system for carrying out a method according to one of Claims 1 to 16, having at least two image recorders (3a, 3b) mutually spaced at a previously known base spacing (d), **characterized by** a storage device for reference data comprising reference positions and reference measured values determined by calibrating the measuring system (3a, 3b, 4), means for determining measured values (Mi) via measuring positions of the measuring element (2), means for comparing the measured values (Mi) with the stored reference data, means for comparing the measured values (Mi) with described coordinates calculated from setting values and for determining correction data for the setting values from the comparison, means for determining corrected setting values for the handling device (1), and having interpolation or extrapolation means for determining actual coordinates of the measuring positions (Xi) from the reference positions during a comparison with measured values (Mi) which do not correspond with previously known reference measured values of the reference positions (Ri).

18. Measuring system according to Claim 17, **characterized in that** two image recorders (3a, 3b) are rigidly connected to each other by a console (4).

19. Measuring system according to Claim 18, **characterized in that** the optical axes of the at least two image recorders are arranged at a predefined angle to each other and cross in front of the image recorders.

20. Measuring system according to one of Claims 17 to 19, **characterized in that** the image recorders are CCD cameras.

## Revendications

1. Procédé pour mesurer un dispositif de manipulation, en particulier une machine outil (1) ou un robot de manipulation, dans lequel le dispositif de manipulation (1) porte au moins un corps de mesure (2), on déplace le corps de mesure selon des valeurs de réglage (Ei) provenant du dispositif de manipulation, successivement en diverses positions de mesure (Xi) réparties dans l'espace de travail tridimensionnel du dispositif de manipulation, et
un système de mesure (3a, 3b, 4) fournit des valeurs de mesure (Mi) sur les positions de mesure du corps de mesure (2), **caractérisé en ce que**
le système de mesure (3a, 3b, 4) est calibré, pour cela au moins un corps de mesure (2) est porté par un dispositif d'étalonnage, on déplace ce corps dans des positions de référence (Ri) réparties dans l'espace de travail tridimensionnel, le système de mesure (3a, 3b, 4) fournit des valeurs d'étalonnage de référence dans les positions de référence, et des données de référence sont établies à partir des positions de référence et des valeurs d'étalonnage de référence,
les valeurs de mesure fournies (Mi) sont comparées avec les données de référence enregistrées, et des coordonnées réelles du corps de mesure (2) sont fournies à partir de la comparaison,
à partir de la comparaison des coordonnées réelles avec les coordonnées théoriques calculées d'après les valeurs de réglage, on fournit des données correctrices pour les valeurs de réglage,
à partir des données correctrices on fournit des valeurs de réglage corrigées pour le dispositif de manipulation (1), et lors de la comparaison à des valeurs de mesure (Mi), qui ne correspondent pas à des valeurs d'étalonnage de référence connues à l'avance pour des positions de référence (Mi), on fournit des coordonnées réelles des positions de mesure (Xi) à partir des positions de référence par interpolation et/ou extrapolation, en particulier interpolation ou extrapolation linéaire.

2. Procédé selon la revendication 1, **caractérisé en ce que** les valeurs de réglage corrigées sont fournies automatiquement par le dispositif de manipulation (1) à partir des données correctrices, puis sont utilisées comme valeurs de réglage.

3. Procédé selon la revendication 1 ou 2, **caractérisé en ce que** le système de mesure optique comprend deux capteurs d'image optiques (3a) distants l'un de l'autre.

4. Procédé selon la revendication 3, **caractérisé en ce que** les coordonnées réelles des positions de mesure (Xi) sont fournies à partir des valeurs de mesure (Mi) par un procédé photogrammétrique au moyen d'une distance connue à l'avance (d) entre les au moins deux capteurs d'image (3a, 3b).

5. Procédé selon l'une des revendications 1 à 4, **caractérisé en ce qu'**au moins deux corps de mesure (2) sont portés par le dispositif de manipulation, de préférence un corps de mesure (2) dans un porte-outil et un corps de mesure (2) dans un porte-pièce, et on fournit des positions relatives entre les au moins deux corps de mesure.

6. Procédé selon l'une des revendications 1 à 5, **caractérisé en ce que** le système de mesure optique est porté par le dispositif de manipulation, et on mesure des positions relatives par rapport à au moins un corps de mesure porté par le dispositif de manipulation.

7. Procédé selon la revendication 6, **caractérisé en ce que** le système de mesure est porté dans un porte-outil et un corps de mesure dans un porte-pièce, ou bien le système de mesure dans un porte-pièce et le corps de mesure dans un porte-outil.

8. Procédé selon l'une des revendications 1 à 7, **caractérisé en ce qu'**au moins un corps de mesure (2) est porté par une broche (7) du dispositif de manipulation dans une position distante de l'axe (17) de la broche (7), et on le fait pivoter dans au moins trois positions de mesure par rotation autour de l'axe de la broche (17) sans modification de l'avance de la broche, puis on détermine l'axe de la broche (17) à partir des trois positions de mesure.

9. Procédé selon l'une des revendications 1 à 8, **caractérisé en ce qu'**au moins deux corps de mesure (2) sont portés par une broche (7) du dispositif de manipulation dans des positions distantes de l'axe (17) de la broche (7), et on les fait pivoter dans au moins deux positions de mesure par rotation autour de l'axe de la broche (17) sans modification de l'avance de la broche, puis on détermine l'axe de la broche (17) à partir des au moins quatre positions de mesure.

10. Procédé selon l'une des revendications 1 à 9, **caractérisé en ce que** les corps de mesure sont capables de luminosité propre.

11. Procédé selon la revendication 10, **caractérisé en ce que** les corps de mesure émettent de la lumière infrarouge et les capteurs (3a, 3b) comportent un filtre infrarouge.

12. Procédé selon l'une des revendications 1 à 11, **caractérisé en ce que** les normales centrales à travers des surfaces de projection obtenues par projection des corps de mesure dans différentes directions de vision, se coupent en un centre géométrique commun du corps de mesure.

13. Procédé selon l'une des revendications 1 à 12, **caractérisé en ce que** le dispositif de manipulation réalise successivement et automatiquement le réglage des différentes valeurs de réglage par les moyens de positionnement, la fourniture des valeurs de mesure des positions de mesure des corps de mesure, et la fourniture de données correctrices à partir des valeurs de mesure et des valeurs de référence.

14. Procédé selon l'une des revendications 1 à 13, **caractérisé en ce qu'**on mesure une machine-outil à cinématique parallèle ou un robot à cinématique parallèle.

15. Procédé selon l'une des revendications 1 à 14, **caractérisé en ce qu'**au moins un corps de mesure tourne autour d'un axe de symétrie.

16. Procédé selon l'une des revendications 1 à 15, **caractérisé en ce que** les positions de référence (Ri) sont réparties à distances régulières sur l'espace de travail tridimensionnel du dispositif de manipulation.

17. Système de mesure optique pour la mise en oeuvre d'un procédé selon l'une des revendications 1 à 16, comprenant au moins deux capteurs d'image (3a, 3b) écartés l'un de l'autre d'une distance de base (d) connue à l'avance, **caractérisé par** un dispositif d'enregistrement pour des données de référence fournies par calibrage du système de mesure (3a, 3b, 4), constituées de positions de référence et de valeurs d'étalonnage de référence, des moyens pour fournir des valeurs de mesure (Mi) sur des positions de mesure du corps de mesure (2), des moyens pour comparer les valeurs de mesure (Mi) avec les données de référence enregistrées, des moyens pour comparer les valeurs de mesure (Mi) avec des coordonnées théoriques calculées à partir de valeurs de réglage et pour fournir des données correctrices pour les valeurs de réglage à partir de la comparaison, des moyens pour fournir des valeurs de réglage corrigées pour le dispositif de manipulation (1), et des moyens d'interpolation et/ou d'extrapolation pour fournir des coordonnées réelles des positions de mesure (Xi) à partir des positions de référence lors d'une comparaison avec des valeurs de mesure (Mi), qui ne correspondent pas à des valeurs d'étalonnage de référence, connues à l'avance, des positions de référence (Ri).

18. Système de mesure selon la revendication 17, **caractérisé en ce que** deux capteurs d'image (3a, 3b) sont reliés rigidement l'un à l'autre par une console (4).

19. Système de mesure selon la revendication 18, **caractérisé en ce que** les axes optiques des au moins deux capteurs d'image sont disposés à un angle prédéterminé l'un par rapport à l'autre et se croisent devant les capteurs d'image.

20. Système de mesure selon l'une des revendications 17 à 19, **caractérisé en ce que** les capteurs d'image sont des caméras CCD.
